**Europäisches Patentamt**

**European Patent Office**

**Office européen des brevets**

(19)

(11) Veröffentlichungsnummer: **0 250 733 B2**

(12) **NEUE EUROPÄISCHE PATENTSCHRIFT**

(45) Veröffentlichungstag der neue Patentschrift:
**25.01.95**

(51) Int. Cl.6: **A22C 11/02**

(21) Anmeldenummer: **87105298.1**

(22) Anmeldetag: **10.04.87**

(54) **Maschine zum Abfüllen teigiger Medien, insbesondere von Wurstbrät.**

(30) Priorität: **24.05.86 DE 3617560**

(43) Veröffentlichungstag der Anmeldung:
**07.01.88 Patentblatt 88/01**

(45) Bekanntmachung des Hinweises auf die
Patenterteilung:
**12.02.92 Patentblatt 92/07**

(45) Bekanntmachung des Hinweises auf die
Entsheidung über den Einspruch:
**25.01.95 Patentblatt 95/04**

(84) Benannte Vertragsstaaten:
**AT BE CH ES FR GB IT LI NL SE**

(56) Entgegenhaltungen:
**EP-A- 0 096 378**
**EP-A- 0 114 084**
**AT-B- 381 209**
**CH-B- 583 521**
**ES-A- 538 003**

**Gossauer Zeitung v. 30.04.1986, "Neuartiger Wurstfüllautomatenantrieb"**

**Prospekt Indramat-Servosysteme, Okt. 1985**

**Elektronik Lexikon, 1982**

**Betriebsanleitung Füller KF 1070 der Fa. Ho-**

egger Alpina, Nov. 1982

**Zeitschrift "Die Fleischerei", Dez. 1985**

**Prospekt der Fa. VEMAG, Robot 3000 DC, 1984**

**AEG-Hilfsbuch d. Elektronik, Band I, 1981, S. 352**

**Prospekt der Fa. STEGMANN, 1984**

(73) Patentinhaber: **Karl Schnell Maschinenfabrik**
**Mühlstrasse 30**
**D-73650 Winterbach (DE)**

(72) Erfinder: **Schnell, Karl**
**Mühlstrasse 28**
**D-7065 Winterbach (DE)**

(74) Vertreter: **Schmid, Berthold, Dipl.-Ing. et al**
**Kohler Schmid + Partner**
**Patentanwälte**
**Ruppmannstrasse 27**
**D-70565 Stuttgart (DE)**

EP 0 250 733 B2

**Beschreibung**

Die Erfindung bezieht sich auf eine Maschine zum portionierten Abfüllen teigiger Medien, insbesondere von Wurstbrät, nach dem oberbegriff des Anspruchs 1.

Eine deartige Maschine ist aus CH-A-583521 bekannt.

Abfüllmaschinen sind insbesondere in der lebensmittelverarbeitenden Industrie sehr gebäuchlich und sie werden dort zur Herstellung von Würsten aber auch zum portionsweisen Abfüllen von Streichkäse und dgl. verwendet (EP 96 378 A). An diese Maschinen werden zwei Hauptforderungen gestellt, nämlich einerseits eine hohe Portionsleistung und andererseits eine große Genauigkeit des Portionsgewichts. Wenn man die gefüllte geraffte wursthülle, welche sowohl ein Naturdarm als auch eine Kunststoffhülle sein kann, lediglich füllt und nicht unterteilt, so entsteht eine Wurst, deren Länge der gestreckten Länge der gerafften Wursthülle entspricht. Eine derartige Wurst ist nicht handelsfähig und deshalb erfolgt meist unmittelbar an der Füllmaschine ein Unterteilen des ablaufenden gefüllten Wurststranges in einzelne Portionen. Dies geschieht durch Quetschen der gefüllten Wursthülle in regelmäßigen Abständen mit Hilfe einer Quetscheinrichtung und einer sogenannte Clips setzenden Vorrichtung oder durch Abdrehen mit Hilfe einer Abdreheinrichtung. Clipse sind in der Regel metallene Klammern und man kann sie entweder einzeln oder mit geringem Abstand paarweise setzen, wobei im letzteren Falle jede Wurst beidennig einen Clip aufweist. Zunächst sind selbstverständlich alle Würste nach dem Clipsetzen bzw. Abdrehen noch miteinander verbunden.

Beim Abdrehen wird der ablaufende gefüllte Wurststrang in geeigneter Weise, beispielsweise aufgrund seines Eigengewichts, festgehalten und man dreht das Füllrohr mit der darauf befindlichen gerafften Wursthülle wenigstens einmal um ihre Längsachse, wobei sie sich dann an vorgesehener Stelle kurz hinter dem freien Füllrohrende abschnürt, so daß zwei benachbarte Zipfel entstehen. Im übrigen wird die Wursthülle dadurch automatisch vom Füllrohr abgezogen, daß das zu pumpende Medium in die Wursthülle einströmt. Hieraus folgt, daß selbstverständlich der Anfang der Wursthülle geschlossen sein muß.

Bei den bekannten Füllmaschinen dieser Art erfolgt der Antrieb durch ein hydraulisches Getriebe über eine Kupplungs-Brems-Kombination oder einen Schrittmotor. Dadurch lassen sich zwar gute, aber keine sehr hohen Portionsgeschwindigkeiten erreichen. Teilweise wünscht man sich auch eine höhere Portionsgenauigkeit.

Die Aufgabe der Erfindung besteht infolgedessen darin, eine Maschine der eingangs genannten Art so weiterzubilden, daß sich die Portionszahl pro Zeiteinheit und möglichst auch die Portionsgenauigkeit erhöhen lassen.

Diese Aufgabe wird erfindungsgemäß mit der Maschine nach Patentanspruch 1 gelöst.

Durch die Verwendung eines elektrisch steuerbaren, als Magnetläufer ausgebildeten Motors, läßt sich einerseits der Antrieb voreinfachen und andererseits eine höhere Portionsgeschwindigkeit dadurch erreichen, daß man derartige Motoren beispielsweise bis zu 400 mal pro Minute anfahren und abstoppen bzw. verlangsamen und beschleunigen kann. Letzteres ist dann erforderlich, wenn das Clipsetzen oder das Abdrehen bei stillstehender bzw. abgebremster Pumpe vorgesehen ist. Weil sich ein derartiger Motor ohne weiteres über einen Mikroprozessor steuern läßt und letzterer bekanntlich mit extremer Genauigkeit arbeitet, kann man auf diese Art und Weise zugleich auch die Portionsgenauigkeit erhöhen.

Eine Weiterbildung der Erfindung sieht vor, daß die Pumpe als Zahnradpumpe mit innenverzahntem, antreibbarem Außenrad und damit kämmendem, außenverzahntem, exzentrisch zum Außenrad gelagertem Ritzel ausgebildet ist. Derartige Pumpen sind als Förderpumpen, insbesondere in der wurstverarbeitenden Industrie, gebräuchlich. Sie zeichnen sich durch hohe Zuverlässigkeit und Robustheit aus. Zusätzlich sind sie noch mit einem ein- oder zweiteiligen Druckstück ausgestattet, welches die Druckseite von der Saugseite trennt. Eine nähere Erläuterung ist jedoch entbehrlich, weil es sich wie gesagt um bekannte Pumpen handelt, zumindest was das Arbeitsprinzip angeht.

Eine weitere Ausgestaltung der Erfindung kennzeichnet sich dadurch, daß der ablaufende gefüllte Wurststrang mittels einer steuerbaren Clipseinrichtung in insbesondere gleichen und vorzugsweise einstellbaren Abständen bei abgeschaltetem Pumpenantrieb in einzelne Würste unterteilbar ist. Auch diese Clipseinrichtungen sind für sich bekannt. Clipse sind beispielsweise U-förmige Metallklammern, die über die Einschnürstelle zwischen benachbarten Zipfeln geschoben und anschließend zu einem Ring oder einer Drahtwindung verformt werden. Wenn man zwei derartige Clipse in kurzem Abstand nebeneinander setzt. so kann man die Wursthülle zwischen diesen beiden Clipsen durchtrennen und erhält auf diese Weise Einzelwürste.

Eine andere Variante besteht darin, daß das Füllrohr bei abgeschaltetem Pumpenantrieb zur Zipfelbildung mittels einer Abdreheinrichtung um wenigstens etwa eine Umdrehung drehbar ist. Zugleich mit dem Füllrohr werden auch die darauf befindliche geraffte Wursthülle und der Bremsring mitgedreht. Weil sich aber andererseits der bereits gefüllte Teil der Wursthülle nicht dreht, entsteht eine Abschnürstelle kurz hinter dem freien Füllrohrende. Dies ergibt bei jedem Abdrehvorgang eine fertige Wurst und den ersten Zipfel der anschließend zu füllenden Wurst. Das Mitdrehen des gefüllten Wurststrangs bzw. der zuvor gefertigten Würste erfordert keine besonderen Einrichtungen, vielmehr reichen das Gewicht und die Reibung zur Drehverhinderung zumindest im wesentlichen aus.

Der steuerbare Motor ist in vorteilhafter Weise mittels wenigstens eines Getriebes, insbesondere eines Zahnriemengetriebes, mit der Antriebswelle des Pumpenaußenrades verbunden. Ein Zahnriemengetriebe schafft eine große Übersetzung mit hoher Präzision bei geringem Platzbedarf.

Eine besonders bevorzugte Ausführungsform der Erfindung sieht vor, daß mittels der Pumpen-Antriebswelle oder einer vorgeschalteten Getriebewelle ein Impulsgeber für wenigstens die Pumpensteuerung antreibbar ist. Die Verwendung eines Impulsgebers ist die Voraussetzung für die präzise elektronische Steuerung und auch die Möglichkeit der Programmierung dieser Maschine. Wenn man den Impulsgeber über die Pumpen-Antriebswelle oder insbesondere eine vorgeschaltete Getriebewelle antreibt. so erspart man sich einen separaten Antrieb und erreicht zugleich auf einfache Art und Weise die synchrone Arbeitsweise.

Selbstverständlich muß die Pumpen-Antriebswelle bzw. Getriebewelle mit vorbestimmter Drehzahl laufen. Diese entspricht nicht notwendigerweise auch der erforderlichen Drehzahl des Impulsgebers und ist beim Ausführungsbeispiel auch nicht vorgesehen. Deshalb sieht eine Weiterbildung der Erfindung vor, daß der Impulsgeber über ein Getriebe, insbesondere ein weiteres Riemen- oder Zahnriemengetriebe, mit der Pumpen-Antriebswelle bzw. der Getriebewelle in Antriebsverbindung ist. Auch dieses Getriebe sorgt für die notwendige Präzision. Es bleibt allerdings festzuhalten, daß zwischen das erwähnte Zahnriemengetriebe und das antreibbare Ritzel der Pumpe noch ein weiteres Getriebe, insbesondere Untersetzungsgetriebe, geschaltet werden kann und vorzugsweise auch vorgesehen ist, wobei der Antrieb für den Impulsgeber auch von einer Welle dieses weiteren Getriebes abgeleitet werden kann bzw. wird.

Eine weitere Ausgestaltung der Erfindung besteht darin, daß die Pumpen-Antriebswelle oder die vorgeschaltete Getriebewelle ein Antriebselement eines Antriebs eines Förderelements in einem dem Pumpeneinlaß vorgesetzten Füllbehälter ist. Wenn sich in letzterem eine vergleichsweise dünnflüssige und möglichst noch fettreiche Masse befindet, so strömt sie allein aufgrund ihres Eigengewichts und ihrer Fließfähigkeit vom Füllbehälter in den darunter befindlichen Pumpeneinlaß. Wenn jedoch relativ steife Massen portioniert werden müssen, beispielsweise bei der Salamiherstellung, so ist es bei der hohen Ausstoßgeschwindigkeit erforderlich, diese Masse dem Pumpeneinlaß zuzufördern. Dies übernimmt ein sowohl formlich an den Füllbehälter als auch an das zu fördernde Gut angepaßtes Förderelement. Es handelt sich dabei um ein rotierendes Förderelement und dieses kann in vorteilhafter Weise ebenfalls synchron vom erwähnten steuerbaren Motor angetrieben werden. Eine gegebenenfalls erforderliche Anpassung der Drehzahl ist gegebenenfalls durch ein weiteres Getriebe leicht zu erreichen.

Eine weitere Variante der Erfindung ist dadurch gekennzeichnet, daß das Förderelement mittels eines Zahnrads bzw. Zahnkranzes antreibbar ist, welches mit einem von der Pumpenwelle oder der vorgeschalteten Getriebewelle antreibbaren Ritzel in Eingriff ist. Erforderlichenfalls kann man noch eine Kupplung dazwischen setzen. Dies ist insbesondere dann von Vorteil, wenn der Behälter zu Reinigungszwecken von der Pumpe oder wenigstens der Pumpenfüllöffnung entfernt werden soll.

In weiterer Ausbildung der Erfindung wird vorgeschlagen, daß die elektrische Steuerung einen aus einem Mikroprozessor, Speichern und Ein-/Ausgabekomponenten bestehenden Mikroccmputer aufweist.

Gemäß einer Weiterbildung der elektrischen Steuerung wird davon Gebrauch gemacht, daß zur Portionierung der jeweils ersten Portion einer Charge ein den Anlaufbetrieb reflektierender Korrekturwert erzeugt wird, der die vom Impulsgeber für die erste Portion gelieferte Impulszahl so korrigiert, daß die gewünschte Gewichtsmenge der Portion eingehalten wird.

Eine weitere vorteilhafte Ausgestaltung der elektrischen Steuerung sieht vor, daß der Korrekturwert je Charge speicherbar ist und für die Herstellung der jeweils ersten Portion einer Charge vom Speicher abrufbar und der Steuerung zuführbar ist.

Schließlich wird in weiterer Ausgestaltung der elektrischen Steuerung vorgeschlagen, daß über eine Ein-/Ausgabesteuerung eine Stichprobenwaage zur automatischen Erzeugung des Korrekturwertes und im übrigen zur laufenden automatischen Produktionsüberwachung der Füllmengen anschließbar ist.

Die Erfindung wird nachstehend anhand der Zeichnung näher erläutert. Die Zeichnung zeigt ein Ausführungsbeispiel der Erfindung. Hierbei stellen dar:

Fig. 1        die Maschine in Vorderansicht und teilweise in vertikaler Richtung geschnitten,
Fig. 2        eine Seitenansicht der Maschine, ebenfalls teilweise in vertikaler Richtung geschnitten,
Fig. 3        eine Prinzipdarstellung der Förderpumpe in vergrößertem Maßstab,
Fig. 4        eine Draufsicht auf die Frontplatte des Steuereinschubes,

Fign. 5 u. 6  Seitenansichten des Steuereinschubes,

Fign. 7 u. 8  zwei Blockschaltbilder der elektrischen Steuerung und

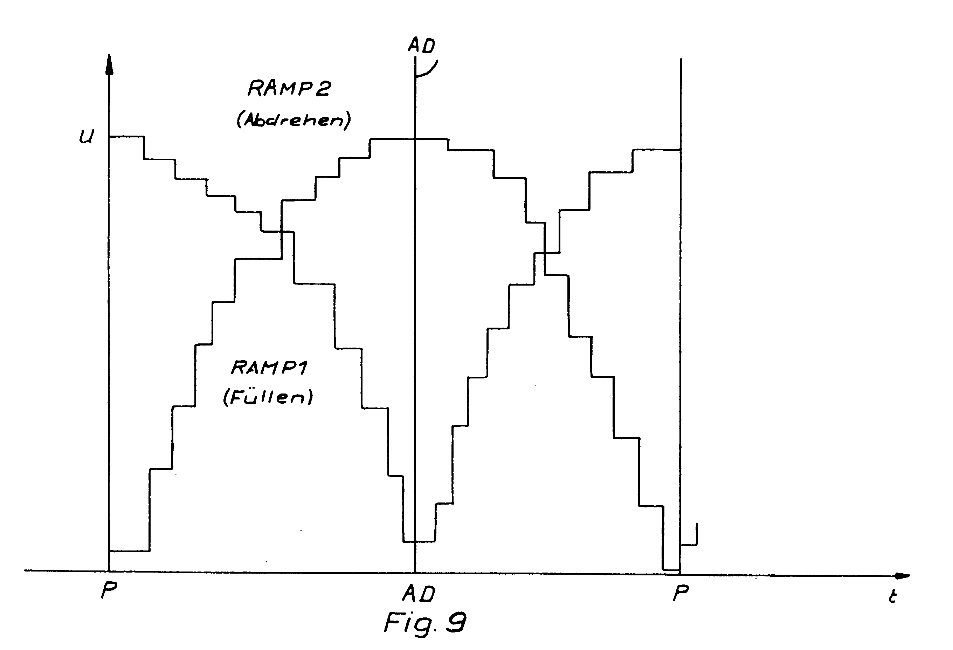

Fig. 9   eine Darstellung des Betriebsspannungsverlaufs für die Servomotoren.

Das in Portionen abzufüllende teigige Medium, insbesondere Wurstbrät, wird vorzugsweise mittels einer geeigneten, nicht dargestellten Beschickungseinrichtung in den Füllbehälter 1 eingebracht. Er hat zweckmäßigerweise eine konische Gestalt und befindet sich über einer Füllpumpe 2. Genauer gesagt ist es so, daß der Auslaß 3 des Füllbehälters 1 über dem Einlaß 4 der Füllpumpe 2 liegt. Wesentliche Elemente der Füllpumpe sind ein innenverzahntes, antreibbares Außenrad 5 mit Antriebswelle 7 und ein hierzu exzentrisch angeordnetes, außenverzahntes Ritzel 6 mit Lagerzapfen 7. Die Ritzelzähne 8 greifen in die Zahnlücken 9 des Außenrads 5, während die Zähne 10 des Außenrads 5 in die Zahnlücken 11 des Ritzels 6 eintreten.

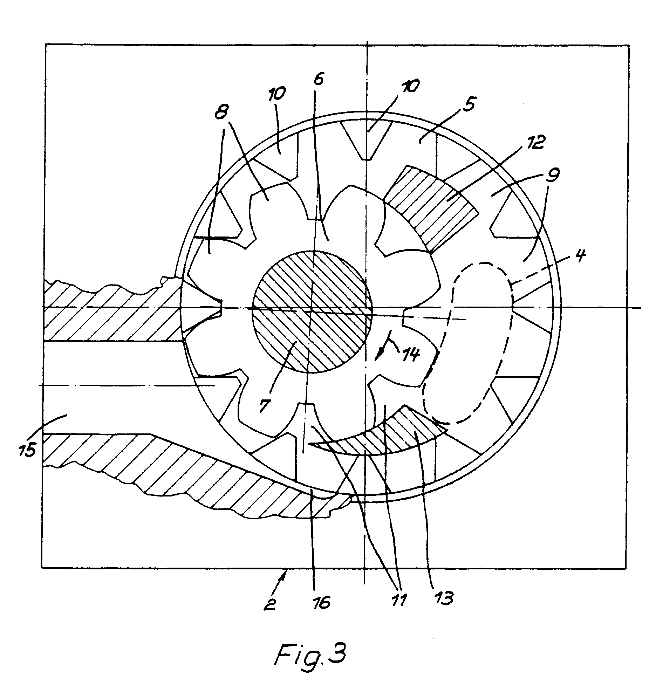

Das in die Pumpe eingebrachte Medium füllt den Teil des Pumpeninnern vollständig aus, der durch die beiden Druckstücke od. Druckstückteile 12 und 13 sowie die momentan im Bereich dieser Druckstücke befindlichen Zahnlücken definiert ist. Nach unten ist dieser Raum durch einen scheibenförmigen Boden des Außenrads 5, auf welchem die Zähne senkrecht zur Bildebene (Fig. 3) stehen, begrenzt, während die obere Begrenzung durch einen in Fig. 3 abgenommenen Deckel erreicht wird. Wenn man das Außenrad 5 im Sinne des Pfeils 14 antreibt, so nimmt es das Ritzel 6 in gleicher Drehrichtung mit. Über die Zahnlücken 11 und 9 wird das Medium zum Auslaß 15 der Pumpe transportiert. Dort treten dann die Zähne wechselweise in die Zahnlücken ein und bewirken dadurch das Entleeren der Zahnlücken in den Auslaß 15 und eine vorgeschaltete Tasche 16 des Gehäuses.

An den Auslaß 15 der Füllumpe 2 schließt sich ein Füllrohr 17 an. Darauf befindet sich eine geraffte Wursthülle 18. Sie durchsetzt einen Spaltraum zwischen dem freien Füllrohrende und einem sogenannten Bremsring 19. Das in Ablaufrichtung 20 vordere Ende der Hülle 18 ist in geeigneter Weise verschlossen, beispielsweise durch einen Knoten. Wenn man nun in diese, wie gesagt vorne verschlossene Wursthülle das Wurstbrät od. dgl. hineinpumpt, so füllt sie sich. Sie wird dabei sukzessive vom Füllrohr abgezogen und entrafft. Dieser ablaufende gefüllte Wurststrang 21 wird in nachstehend noch näher erläuterter Weise in vorgegebenen Abständen eingeschnürt, um dadurch Würste insbesondere gleicher Länge zu bilden.

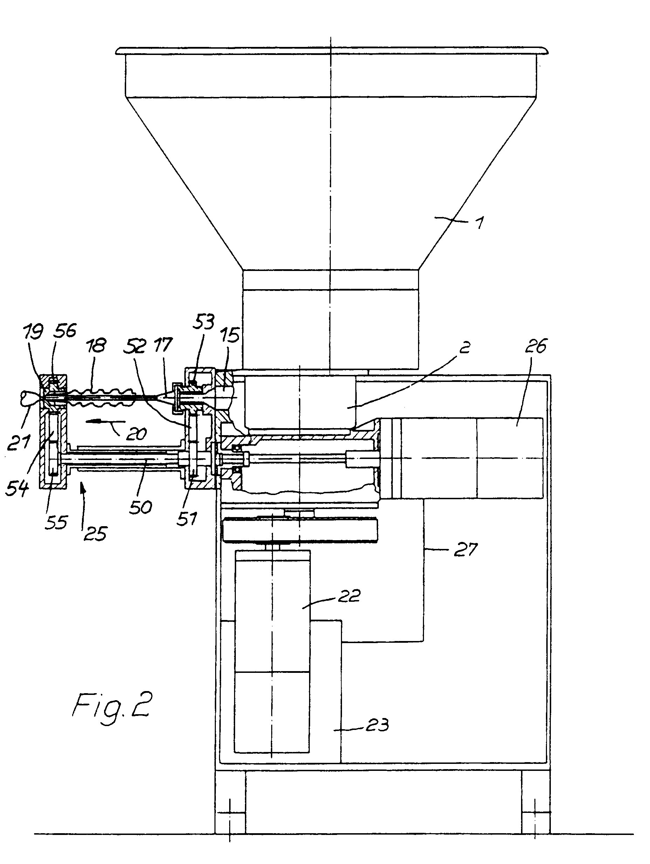

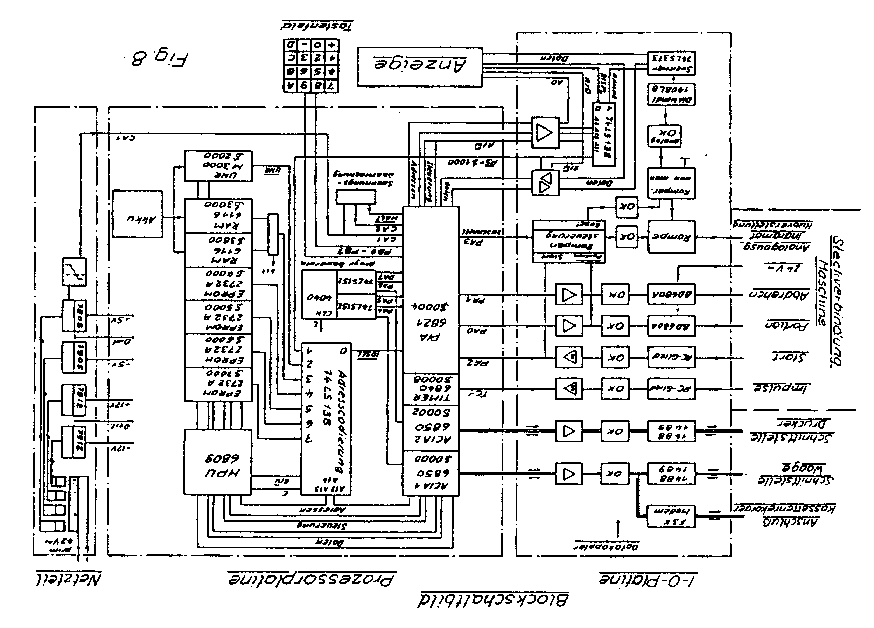

Die Füllpumpe 2 wird mit Hilfe eines elektrisch steuerbaren Motors 22, insbesondere eines Magnetläufers, intermittierend angetrieben. Der Motor ist mit Hilfe eines Mikroprozessors, einer elektrischen Steuereinrichtung 23, steuerbar. Die Linie 24 symbolisiert die elektrische Verbindung der Steuereinrichtung 23 mit dem Motor 22. Bei langsam ablaufendem Vorgang steht der ablaufende gefüllte Wurststrang 21 still, während sich das Füllrohr 17 mit der Wursthülle 18 und dem Bremsring 19 wenigstens einmal um ihre Längsachse drehen. Weil jedoch diese Vorgänge außerordentlich schnell ablaufen, beispielsweise 300 bis 400 mal pro Minute, kommt es in Wirklichkeit lediglich zu einem Abbremsen und Beschleunigen des Motors 22 und der Abdreheinrichtung 25, die mit Hilfe eines zweiten, elektrisch steuerbaren Motors (26) in der nachstehend beschriebenen Weise antreibbar ist. Auch dieser zweite Motor 26 ist über den Mikroprozessor bzw. die elektrische Steuereinrichtung 23 antreib- und steuerbar. Dies symbolisiert die Linie 27 in Fig. 2. Beim Motor 26 handelt es sich gleichfalls um einen Servomotor bzw. einen Magnetläufer. Die beiden Motore 22 und 26 werden also wechselweise ein- und ausgeschaltet, wobei man sich ihre Betriebsweise bei schnellem Arbeiten, also bei hoher Wurstzahl pro Zeiteinheit mittels einer Sinuskurve und einer überlagerten Cosinuskurve bildlich leicht vorstellen kann (vgl. auch Fig. 8).

Der steuerbare Motor bzw. dessen Abtriebswelle 28 ist mittels wenigstens eines Getriebes 29 - beim Ausführungsbeispiel indirekt -mit der Pumpenantriebswelle 37 antriebsmäßig verbunden. Beim Getriebe 29 handelt es sich vorzugsweise um ein Zahnriemengetriebe mit dem auf die Abtriebswelle 28 aufgesetzten Antriebsrad 30 und dem getriebenen Rad 31 sowie dem Zahnriemen 32. Das getriebene Rad 31 sitzt auf einer Getriebewelle 33, die ein Ritzel 34 des Getriebes 35 trägt. Es kämmt mit einem Zahnrad 36 auf der Pumpenantriebswelle 37.

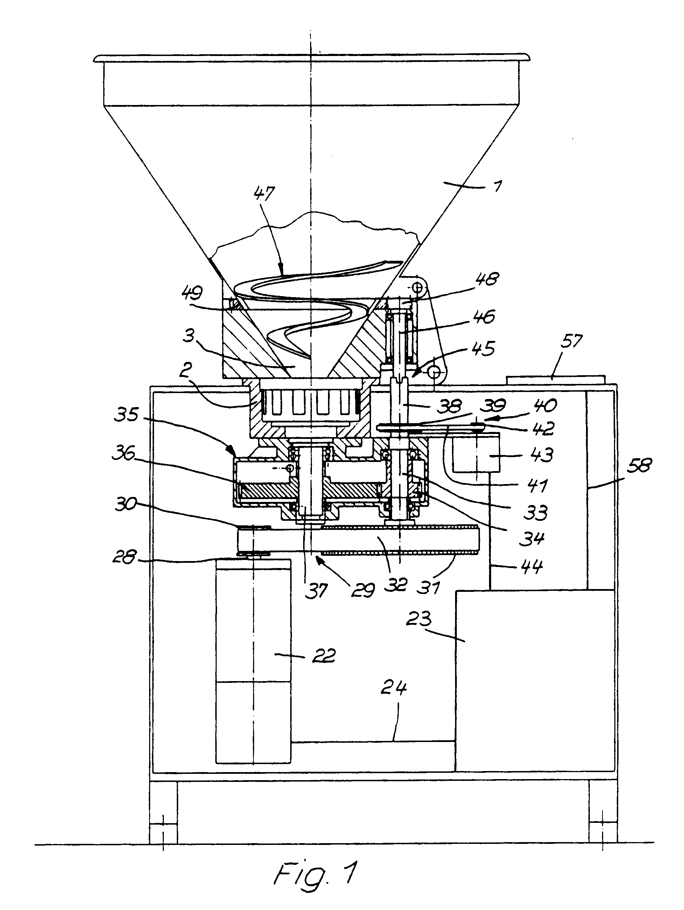

Die Getriebewelle 33 ist über das Getriebegehäuse nach außen geführt und die Getriebewellenverlängerung 38 trägt ein Antriebsrad 39 eines weiteren Getriebes 40, welches gleichfalls als Riemen-oder Zahnriemengetriebe ausgebildet sein kann. Der Riemen 41 dieses Getriebes 40 treibt ein Ritzel oder Rad 42 an, welches auf einer Antriebswelle eines Impulsgebers 43 befestigt ist. Auch dieser Impulsgeber ist mit der elektrischen Steuereinrichtung 23 verbunden, was in Fig. 1 schematisch mit der Linie 44 zum Ausdruck kommt. Er liefert die notwendigen Impulse, welche zum Steuern der Antriebe der Maschine und verschiedener Funktionen, z.B. Portionieren, des Prozessors erforderlich sind.

Vorzugsweise über eine lösbare Kupplung 45 ist die Getriebewellen-Verlängerung 38 mit einer Antriebswelle 46 für ein Förderelement 47 antriebsverbunden. Dieses ist Teil einer Fördervorrichtung, welche das Medium im Füllbehälter 1 zwangsweise zum Pumpeneinlaß 4 fördert. Die Antriebswelle 46 trägt zu diesem Zwecke an ihrem in Fig. 1 oberen Ende ein Ritzel 48, dessen Zähne mit denjenigen eines Zahnkranzes 49 kämmen. Der Zahnkranz ist drehfest mit dem Förderlement 47 verbunden, welches ihn in Achsrichtung durchsetzt. Das Förderelement hat die Gestalt einer Förderschnecke und es ist aus bandförmigem Material hergestellt. Letzteres wurde zu einer kegelförmigen Spirale gebogen, wie Fig. 1 der Zeichnung deutlich zeigt und welche an die Kontur des Behälters angepaßt ist.

Die Abdreheinrichtung 25 ist vorzugsweise abnehmbar. Sie besitzt eine Vorgelegewelle 50, welche gemäß Fig. 2 vom zweiten Motor 26 intermittierend angetrieben wird. Ein erstes Ritzel 51 der Vorgelegewelle 50 treibt, vorzugsweise wiederum mittels eines Riemens 52, ein Zahnrad 53 an, welches drehfest mit dem Füllrohr 17 verbunden oder einstückig damit hergestellt ist. Der Riemen 52 kann ebenfalls ein Zahnriemen sein, genauso wie der Riemen 54, welcher die Drehverbindung zwischen einem zweiten Ritzel 55 od. dgl. und einem zweiten Zahnrad 56 od. dgl. schafft. Letzteres ist an einen Halter für den Bremsring angeformt oder damit verbunden. Die beiden Übersetzungen 51, 53 sowie 55, 56 sind gleich, um ein synchrones Drehen des Füllrohrs 17 und des Bremsrings 19 einschließlich der gerafften Wursthülle 18 zu gewährleisten.

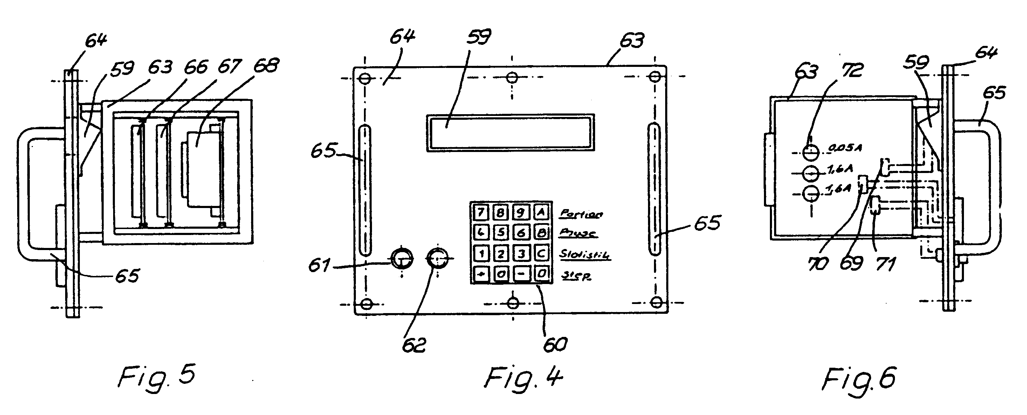

Die elektrische Steuereinrichtung 23, die der Abfüllmaschine eine sehr hohe Flexibilität hinsichtlich der Art der Abfüllartikel und eine besonders hohe Abfüllgeschwindigkeit verleiht, kann auch als Steuereinschub 63 ausgebildet sein, der eine Bedienungskonsole 57 mit einer Anzeige 59 und einem Tastenfeld 60 sowie Anschlüssen 61 für eine Stichprobenwaage und 62 für einen Protokollierdrucker enthält. Ferner verfügt der Steuereinschub 63 über Steckplätze zur Aufnahme einer Prozessorkarte 66, einer Ein-/Ausgabekarte 67 und eines Netzteiles 68, wie die Fign. 4 und 5 erkennen lassen.

Fig. 6 zeigt außerdem eine Anordnung von Steckern 69 für den Anschluß der Anzeige 59, 70, für den Anschluß des Tastenfeldes 60 sowie 71 für den Anschluß eines Druckers und einer Waage. Die zum Schutz des elektrischen Teiles vorgesehenen Sicherungen sind bei 72 dargestellt.

Die elektrische Steuereinrichtung 23, deren wesentliches Element eine zentrale Steuereinheit (CPU) ist, erzeugt die für die Bedienung, Einstellung und den Betrieb erforderlichen elektrischen Steuersignale. Standardfunktionen, die hierbei gesteuert werden, sind Portionieren, Abdrehen, Bedienungspausen sowie eine Korrektur der Dosierung für die erste Portion. Außerdem kann die Füllgeschwindigkeit über die Betriebsspannung des ersten und zweiten Servomotors 22 und 26 eingestellt werden. Die Betriebsspannung der Servomotore hat einen rampenartigen Verlauf im Bereich von 0 bis 10 Volt maximal, wobei der Wert 10 Volt der maximalen Füllgeschwindigkeit (100 %) entspricht. Die rampenförmige Betriebsspannung, kurz Steuerrampe genannt, kann in ihrer Form, bzw. ihrem Verlauf, der Konsistenz des Füllgutes und der Beschaffenheit des Verpackungsmaterials angepaßt werden, wobei die günstigsten Werte empirisch ermittelt und anschließend in einem Lese-/Schreibspeicher abgelegt werden.

Die elektrische Steuereinrichtung 23 verfügt, wie zuvor bereits erwähnt wurde, über einen Lese-/Schreibspeicher 77, in dem die Portionsparameter, wie Gewicht, Pause, Abdrehen, Abdrehverzögerung, Füllgeschwindigkeit usw. für 100 verschiedenartige Portionen gespeichert werden können. Der Lese-/Schreibspeicher 77 wird über eine Notstromversorgung 83, einen Akkumulator, der sich auf der Prozessorplatine befindet, versorgt, so daß auch bei ausgeschaltetem Gerät oder bei herausgezogener Prozessorkarte die Portionsdaten erhalten bleiben. Über das Tastenfeld 60 mit insgesamt 16 Tasten können neue Portionen eingegeben oder geändert werden. Nach dem Einschalten der Maschine erscheint in der 20-stelligen alphanumerrischen Anzeige eine Informationszeile, die Portionsnummer, Name und Gewicht der Portionen anzeigt. Durch Eingabe der Portionsnummer können die gewünschte Portion und deren Daten abgerufen werden.

Durch Betätigung der Funktionstaste D von den insgesamt vier vorgesehenen Funktionstasten A bis D, auf die noch eingegangen werden wird, kommen nacheinander sämtliche Portionsparameter zur Anzeige und können eingegeben, geändert oder über die Pluszeichen- oder Minuszeichen-Tasten während des Laufes der Füllmaschine geändert werden.

Wie bereits früher schon erwähnt wurde, sind in der Frontplatte 64 des Steuereinschubs 63 (Fig. 4) zwei Schnittstellenbuchsen 61 und 62 für V 24 bzw. RS 232 Schnittstellen eingelassen, welche den Anschluß einer Stichprobenwaage und eines Druckers ermöglichen. Abweichungen der Stichproben vom Sollwert werden zu einem Korrekturwert verarbeitet, der im Portionierparameter "Korrektur" angezeigt und abgespeichert wird.

Die Stichproben werden vom Drucker protokolliert. Bei Betätigung der Funktionstaste C oder beim Start einer neuen Portion wird eine Auswertung der statistischen Daten der Stichproben ausgedruckt (Sollwert, Anzahl, Mittelwert, Standardabweichung, Minimum und Maximum). Beim Start der Stichproben und Auswertung werden Datum und Uhrzeit ausgedruckt, welche von einer Uhr 82 geliefert werden, die über den Prozessorbus 75 an die CPU 73 angeschlossen ist.

Zur Sicherung der eingegebenen Portionsdaten können diese nach Anschluß eines externen Speichers, vorzugsweise eines Kassettenrekorders, auf ein Speichermedium, im Falle eines Kassettenrekorders auf eine Kassette abgespeichert werden.

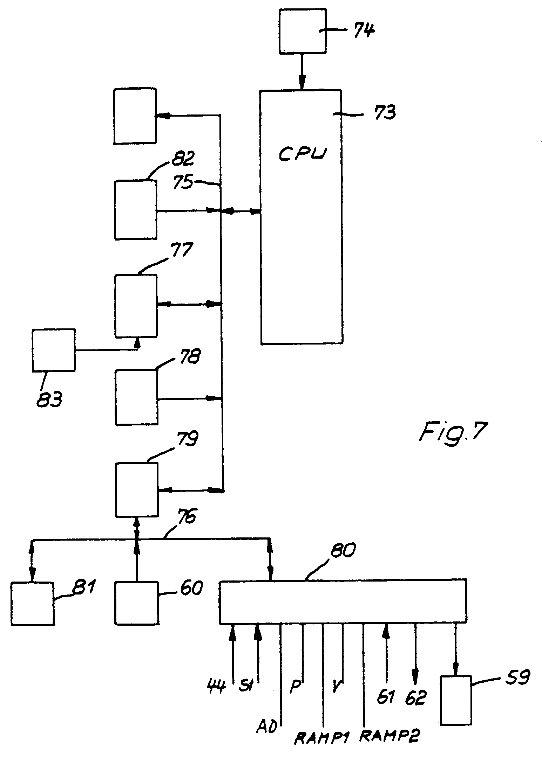

Die Bestriebsspannung der Servomotore mit einstellbarer Beschleunigungs- und Bremsrampe sowie die programmierbare Füllgeschwindigkeit steuert sowohl den Einfüll- als auch den Abdrehvorgang, welch letzterer durch das Abdrehsignal AD (vgl. Fig. 7) eingeleitet wird.

Die Eingabe der Betriebsparameter erfolgt in zwei Ebenen, in der a) Füllebene und b) Systemebene, die beide im folgenden aufgelistet werden:

a) Füllebene:

| 0 Portion | = Eingabe der Portionsnummer |
|---|---|
| 1 Korrektur | = Eingabe Korrekturwert Optimierung durch + /- -Taste Wiegekorrektur über Korrekturwaage wirkt auf Korrekturwert |
| 2 Nachlauf | = keine Eingabe Messung des Maschinenauslaufs |
| 3 1. Portion | = Veränderung der 1. Portion -50 bis + 150 Gramm |
| 4 Pause | = Eingabe begrenzt auf 5 sec. = max. Wert Abdrehverzögerung = min. Optimierung durch +/- -Taste Auflösung Millisekunden |
| 5 Abdrehen | = Eingabe 0 - 0,6 sec. Optimierung durch +/- -Taste Auflösung Millisekunden |
| 6 Abdrehverzögerung | = Eingabe 0 bis 0,150 Sek. eingestellte Pause begrenzt Abdrehverzögerung Optimierung durch +/- -Taste Auflösung Millisekunden |
| 7 Füllgeschwindigkeit | = Eingabe in % Optimierung durch +/- -Taste Auflösung 0,4 % |
| 8 Gewichtseingabe | = Eingabe 0 - 30 000 Gramm |
| 9 Portionen pro Strang | = Eingabe 1 bis 9 für Wiegekorrektur Anzahl der Portionen, die zusammen gewogen werden. Sollgewicht = Portionen/Strang × Portionsgewicht |
| 10 Name | = Namenseingabe für Portion über +/- -Taste Position des Zeichens. 0 - 9 Zeichendurchlauf mit programmierbarer Schleife betätigte Ziffer = Schleifenmultiplikator |
| 11 mit/ohne Clipper | = Ein- oder Ausschalten der Selbsthaltung des Startsignals bis Portionsende Anzeige ja/nein Umschaltung durch Betätigung einer Zifferntaste |
| 12 Ebenenwechsel | = Weh Füllebene - Systemebene; Umschaltung durch Betätigung einer Zifferntaste |

b) Systemebene:

| 13 Uhreinstellung | = Anzeige und Einstellung des Uhrenbausteins |
|---|---|
| 14 Speichern auf Kassette | = Portionsspeichern auf Kassette abspeichern über FSK-Modem |
| 15 Laden von Kassette | = von Kassette auf Portionsspeicher laden über FSK-Modem |
| 16 Schnittstellen | = Einstellung der Schnittstellenparameter Baudrate,Übertragungsformate |

Die eingegebenen Parameter werden von der elektrischen Steuereinrichtung entsprechend verarbeitet und führen zur Erzeugung der entsprechenden Ausgangsrampe, einschließlich eines Portionierungssignals P, des Abdrehsignals AD und eines Geschwindigkeitskorrektursignals V, das immer dann erzeugt wird, wenn die Geschwindigkeit, gemessen über den Impulsgeber 43, zu hoch ist. Der Impulsgeber ist für einen weiten Bereich von Anwendungen und Betriebszuständen dimensioniert und im vorliegenden Beispiel mit einem Gramm je Impuls bewertet.

Für die Steuerung bedeutet dies, daß beispielsweise bei der Herstellung von 250 g-Würsten 250 Impulse pro Wurst erzeugt werden. Arbeitet die Füllmaschine mit einer Geschwindigkeit von 100 Würsten pro Minute, so entspricht dieses einer Impulsrate von 25 000 Impulsen pro Minute bzw. von 416 2/3 Impulsen pro Sekunde, was einer Impulsfrequenz von 416,666 Hz entspricht.

Wie der obigen Tabelle unter a) 5, 6 und 7 zu entnehmen ist, ist das Abdrehen bzw. Clipsen in bestimmten Grenzen einstellbar, damit die gewünschten Betriebsparameter optimal erreicht werden. Dies gilt auch für die Korrektur der ersten Portion, die aus folgenden Gründen erforderlich ist:

Wenn die Maschine anläuft, also der allererste Teil der Verpakkungshülle mit dem teigigen Medium gefüllt wird, muß auch zunächst die Pumpe gefüllt werden und erst wenn diese ganz gefüllt ist und auch das teigige Medium bis zum vorderen Ende der gerafften Verpackungshülle vorgedrungen ist, wird durch eine Art Rückstau ein kontinuierlicher Pumpendruck erreicht. Während der Bildung oder Füllung der ersten Portion arbeitet die Pumpe zunächst mit ansteigendem, d.h. nicht konstantem Druck. Dies bedeutet, daß bei Vorgabe einer gewissen Impulszahl für das Gewicht der Portion eine zu leichte erste Portion, beispielsweise eine zu kurze erste Wurst, erzeugt wird. Würde man nun für die im vorhergehenden Beispiel gewählte 250 g-Wurst 250 Impulse zugrundelegen, so wöge sie vermutlich nur 220 g, weil ihr vorderes Ende mit gewissermaßen zu geringem Druck gefüllt wurde. Ein empirischer Korrekturwert kann dann der elektrischen Steuereinrichtung 23 mitgeteilt und dort gespeichert werden, so daß jeweils die erste Portion verschiedener Portionsnummern auch später jederzeit mit korrektem Gewicht herstellbar ist.

Fig. 7 zeigt nun die wesentlichen Komponenten der elektrischen Steuereinrichtung 23, bestehend aus einer zentralen Steuereinheit (CPU) 73, beispielsweise einem Mikroprozessor bekannter Bauart, dessen Betriebsabläufe in zeitlicher Hinsicht von einem Taktgeber 74 gesteuert werden. Die zentrale Steuereinheit 73 ist über einen Prozessorbus 75, der die erforderlichen Steuer-, Adressen- und Datenleitungen umfaßt, mit einem Lese-/Schreibspeicher 77, einem Lesespeicher 78 und einem programmierbaren Ein-/Ausgabeadapter verbunden. Der letztgenannte Adapter ist über einen Ein-/Ausgabebus 76 mit einer Ein-/Ausgabesteuerung 80 sowie einem Timer 81 und dem Tastenfeld 60 verbunden. Die Anzeige wiederum ist über die Ein-/Ausgabesteuerung 80 an den Mikrocomputer angeschlossen. Die für Protokollierzwecke vorgesehene Uhr, die Zeit und Datum angibt, ist über den bereits erwähnten Prozessorbus 75 angeschlossen.

Bei dem in Fig. 7 dargestellten Mikrocomputer fällt der Ein/Ausgabesteuerung 80 die besondere Aufgabe zu, externe Steuersignale, wie beispielsweise die Impulse des Impulsgebers 43, über die Leitungen 44, das Startsignal ST oder beispielsweise die Daten der Stichprobenwaage über den Anschluß 61 dem Mikrocomputer zuzuführen bzw. Steuersignale aus dem Computer den übrigen elektrischen Komponenten zuzuführen, wie beispielsweise die Ausgangsrampe RAMP1 für den ersten Servomotor 22 und RAMP2 für den zweiten Servomotor 26 oder die auszudruckenden Daten über den Anschluß 62 dem Drucker zuzuführen.

Andere Signale, wie beispielsweise das Abdrehsignal AD oder das Portioniersignal P oder das Geschwindigkeitssignal V, das eine zu hohe Geschwindigkeit signalisiert, werden für eine prozessorinterne Verarbeitung benötigt. Das Wechselspiel von Portioniersignal P und Abdrehsignal AD ist in Fig. 8 dargestellt, die im übrigen die gegenphasigen Ausgangsrampen RAMP1 und RAMP2 zeigt.

Die endgültige Form der Ausgangsrampen wird weitgehend durch das verwendete Material und die Arbeitsgeschwindigkeit, d.h. die Produktionsgeschwindigkeit der Portionen bestimmt und weitgehend empirisch ermittelt. Diese Werte sind speicherbar, wobei als Speicher hierfür sowohl der Lese-/Schreibspeicher 77 als auch der Lesespeicher 78, der das eigentliche Steuerprogramm enthält, in Betracht kommen.

Die folgende Schaltungsbeschreibung bezieht sich auf das Blockschaltbild gemäß Fig. 8.

Prozessorplatine

    1. MPU = Mikroprozessor 6809
    2. Speicherblock
       a) Programmspeicher
       EPROM 4 × 2732 A 16 KByte
       b) Rezeptspeicher - Akku gepuffert
       RAM 2 × 6116 4 KByte
    3. I-O-Block
       A) ACIA = ASYNCHRONOUS COMMUNICATIONS
       INTERFACE ADAPTER 6850
          ACIA 1     = asynchrone Schnittstellen für Waage und FSK Modem
          ACIA 2     = asynchrone Schnittstelle für Drucker
       B) PIA = PERIPHERAL INTERFACE ADAPTER 6821
       Ein- und Ausgänge für Maschinenansteuerung,
       Tastenfeldabfrage,
       programmierbare Baudrateneinstellung
       zu schnelle Füllgeschwindigkeit
       Spannungsüberwachung
       C) PTM = PROGRAMMABLE TIMER 6840
       Eingang Impulse - Drehimpulsgeber
       Portionszähler
       Zeitglied mit Zeitbasis 1 ms
    4. Adresscodierung
    8 - Bit - Dekoder 74LS138 - 8 Adressblöcke
       0 = IOSEL = I-O-Block (ACIA, PIA, PTM)
       1 = PS = Platinenselektion Anzeige und D/A-Wandler
       2 = UHR = Uhrenselektion

3 = RAM = RAM-Selektion
4 = EPROM 1
5 = EPROM 2
6 = EPROM 3 = EPROM-Selektion
7 = EPROM 4
5. Programmierbare Baudratenerzeugung
12 Bit - Binärzahler 4040
2 × 8 BIT-Mulitplexer 74LS152
6. Spannungsüberwachung
Ladespannung an + 5 V Versorgung
7. Uhrenbaustein Akku gepuffert
Ausgabe von Datum und Uhrzeit für statistische Dokumentation


<u>I - O - Platine</u>

1. V 24 (RS 232 C) - 4 Draht-Schnittstellen galvanische Entkopplung durch Optokoppler
mit RS 232 C - Treiber 1488 L
und RS 232 C - Receiver 1489 L
für Waagen und Druckeranschluß
2. FSK-Modem für Kassettenrekorderanschluß um Rezeptspeicherinhalt auf Kassette zu sichern.
3. Maschinenanschluß
   A) Transistorausgänge für Portion und Abdrehen zur Ansteuerung von Magnetventilen galvanische Entkopplung durch Optokoppler
   B) Eingänge für Start und Impulse mit RC-Gliedern zur Entstörung und galvanischer Entkopplung durch Optokoppler
   C) Analogausgang
      a) Ansteuerung für Drehstromservoantrieb mit Steuerrampe 0 - 10 V mit analoger galvanischer Entkopplung
      b) Ansteuerung der Hubverstelleinrichtung (programmierbare Geschwindigkeitseinstellung) für pneumatisch/hydraulischen Antrieb 0 - 5 V mit analoger galvanischer Entkopplung
4. Anzeigenansteuerung über Datenbus und Adressbustreibern
5. Digital/Analogwandler mit Datenbusspeicher für programmierbare Geschwindigkeitseinstellung Als Anlagen 1 bis 3 werden Beispiele überreicht und zwar:
Anlage 1 Beispiel einer eingestellten Portion,
Anlage 2 Beispiel einer Parameterveränderung bei laufender Portionierung,
Beispiel 3 Parameterveränderungen bei ausgeschalteter Portionierung.

Beispiel einer eingestellten Portion

Maschine einschalten:  zuletzt gefüllte Portion wird angezeigt.

| Taste | Anzeige | | Parameter Nr. + Bemerkung |
|---|---|---|---|
| bei ausge-schalteter Portionierung | 01 Salami | 500g | 0 = Portion |
| D | 01 Korrektur | 0g | 1 = Korrektur |
| D | 01 1. Portion | +60g | 3 = Korrektur 1. Portion |
| D | 01 Pause | 0.500s | 4 = Pause |
| D | 01 Abdrehen | 0.120s | 5 = Abdrehen |
| D | 01 Abdr.verz. | 0.050s | 6 = Abdrehverzögerung |
| D | 01 Füllgeschw. | 50.0% | 7 = Füllgeschwindigkeit |
| D | 01 Gewicht | 500g | 8 = Gewichtseingabe |
| D | 01 Port./Str. = 1 | | 9 = Portionen pro Strang |
| D | 01 Name →Salami ← | | 10 = Name |
| D | 01 mit Clipper → nein | | 11 = mit/ohne Clipper |
| D | 01 Füllebene | | 12 = Ebenenwechsel |

| | | | |
|---|---|---|---|
| D oder A | 01 Salami | 500g | 0 = Portion |
| B | 01 Pause | 0.500s | 4 = Pause |
| C | Anzeige unverändert | | Statistikausgabe auf Drucker |

Portionierung starten

| Taste | Anzeige | | Parameter Nr. + Bemerkung |
|---|---|---|---|
| bei laufender Portionierung A | 01 Salami | 500g | 0 = Portion |
| D | 01 Korrektur | 0g | 1 = Korrektur |
| D | 01 Nachlauf | 92g | 2 = Nachlaufmessung |
| D | 01 1. Portion | +60g | 3 = Korrektur 1. Portion |
| 3 x D | | | |
| D | 01 Füllgeschw. | 50.0% | 7 = Füllgeschwindigkeit |
| D | 01 Salami | 500g | 0 = Portion |

9

Beispiele – Parameterveränderung

bei laufender Portionierung

| Taste | Anzeige | | Parameter Nr. + Bemerkung |
|---|---|---|---|
| bei laufender Portionierung | | | |
| D | 0 1 S a l a m i | 5 0 0 g | keine Veränderung |
| D | 0 1 K o r r e k t u r | 0 g | |
| + 8 mal oder ca. 2 Sek. | 0 1 K o r r e k t u r | + 8 g | Korrekturwert. + 8 g |
| - 12 mal oder ca. 3 Sek. | 0 1 K o r r e k t u r | - 4 g | Korrekturwert 12 g reduziert |
| D | 0 1 N a c h l a u f | 9 2 g | keine Veränderung durch Taste |
| D | 0 1 1 . P o r t i o n | + 6 0 g | Veränderung wie Korrektur |
| D oder B | 0 1 P a u s e | 0 . 5 0 0 s | |
| + ca. 3 Sek. | 0 1 P a u s e | 0 . 5 8 1 s | Wert läuft hoch ca. 25 ms/Sek. |
| - ca. 1 Sek. | 0 1 P a u s e | 0 . 5 6 5 s | Wert läuft runter |
| - kurz | 0 1 P a u s e | 0 . 5 6 4 s | Wert um 1 ms niedriger |
| + 2 x kurz | 0 1 P a u s e | 0 . 5 6 6 s | Wert um 2 ms erhöht |
| D | 0 1 A b d r e h e n | 0 . 1 2 0 s | Veränderungen wie bei |
| D | 0 1 A b d r . v e r z . | 0 . 0 5 0 s | Pause |
| D | 0 1 F ü l l g e s c h w . | 5 0 . 0 % | |
| + 1 mal | 0 1 F ü l l g e s c h w . | 5 0 . 4 % | Wert um 0,4% erhöht |
| - 2 mal | 0 1 F ü l l g e s c h w . | 4 9 . 6 % | Wert um 0,8% niedriger |
| - ca. 3 Sek. | 0 1 F ü l l g e s c h w . | 4 2 . 0 % | Veränderungen ca. 2,5%/Sek. |
| D | 0 1 S a l a m i | 5 0 0 g | |

EP 0 250 733 B2

Beispiele – Parameterveränderungen

bei ausgeschalteter Portionierung

| Taste | Anzeige | | Parameter Nr. + Bemerkung |
|---|---|---|---|
| Portionierung aus | 01 Salami | 500g | |
| 5 | 15 Portion | 0g | Portion 15 nicht belegt |
| 0 | 50 Portion | 0g | Portion 50 nicht belegt |
| 2 | 02 Wienerle | 100g | 02=Portionsnr. Wienerle aufgerufen |
| D | 02 Korrektur | 0g | |
| 2 | 02 Korrektur | 2g | 2 eingegeben |
| 3 | 02 Korrektur | 23g | 23 eingegeben |
| + oder D 1 mal | 02 Korrektur | +23g | Korrektur positiv |
| 4 | 02 Korrektur | 4g | 4 eingegeben |
| 1 | 02 Korrektur | 41g | 41 eingegeben |
| - 1 mal | 02 Korrektur | -41g | Korrektur negativ |
| D | 02 1. Portion | +50g | Eingabe wie Korrektur |
| D | 02 Pause | 0.600s | |
| 1 | 02 Pause | 1.s | 1 eingegeben |
| 2 | 02 Pause | 1.2s | 1.2 eingegeben |
| 0 oder A, B, C, D, +, -. | 02 Pause | 1.20s | 1.20 eingegeben |
| 0 oder A, B, C, D, +, -. | 02 Pause | 1.200s | Eingabe fertig |
| D | 02 Abdrehen | 0.300s | Eingabe wie |
| D | 02 Abdr.verz. | 0.300s | Pause |
| D | 02 Füllgeschw. | 100.0% | |
| 2 | 02 Füllgeschw. | 2% | 2 eingegeben |
| 9 | 02 Füllgeschw. | 29% | 29 eingegeben |
| D | 02 Füllgeschw. | 29.% | Dezimalpunkt eingegeben |
| 7 | 02 Füllgeschw. | 29.6% | auf Auflösung gerundet Eingabe fertig |

11

| Taste | Anzeige | Parameter Nr. + Bemerkung |
|---|---|---|
| D | 0 2 Gewicht 2 0 0 g | |
| 4 | 0 2 Gewicht 4 g | 4 eingegeben |
| 6 | 0 2 Gewicht 4 6 g | 46 eingegeben |
| 0 | 0 2 Gewicht 4 6 0 g | 460 eingegeben |
| 1 mal A, B, C, D oder + | 0 2 Gewicht 4 6 0 g | Eingabe beendet |
| D | 0 2 Port./Str. = 1 | 1 Portion pro Strang eingestellt |
| 3 | 0 2 Port./Str. = 3 | 3 Portionen pro Strang eingestellt Sollgewicht = 3 x 460 g = ~~1380 g~~ Gewicht auf Waage wird mit 1380 verglichen |
| A | 0 2 Wienerle 3 x 4 6 0 g | Anzeige in Kopfzeile Sollgewicht = 3 x 460 g |
| D 9 mal | 0 2 Name → W̲ienerle ← | Name mit unterstrichener Zeichenposition |
| – 7 mal | 0 2 Name → Wienerl̲e ← | Positionszeiger 7 Stellen nach rechts |
| 0 bis 9 bis gewünschtes Zeichen erscheint | 0 2 Name → Wienerl̲_ ← | Zeichendurchlauf bis Taste losgelassen wird. 0 bis 9 unterschiedliche Laufgeschwindigkeit |
| + 1 mal | 0 2 Name → Wienerl̲ ← | Positionszeiger 1 Stelle nach links |
| 0 bis 9 bis gewünschtes Zeichen erscheint | 0 2 Name → Wiener̲_ ← | Zeichendurchlauf bis Taste losgelassen wird. |
| D | 0 2 mit Clipper → nein | |
| 0 bis 9, +,– | 0 2 mit Clipper → ja | Schnellabschaltung eingesch |
| 0 bis 9, +,– | 0 2 mit Clipper → nein | Schnellabschaltung ausgeschaltet. Beim Loslassen des Starthebels wird Portic fertiggemacht. |
| A | 0 2 Wiener 3 x 4 6 0 | zurück zur Kommandozeile |

## Patentansprüche

1. Maschine zum portionierten Abfüllen teigiger Medien, insbesondere von Wurstbrät, in eine schlauchförmige Hülle (18) mit einer Abdreheinrichtung (25) für die Zipfelbildung oder mit einer Clipseinrichtung sowie mit einer Füllpumpe (2), die mittels eines elektrisch steuerbaren, insbesondere als Magnetläufer ausgebildeten Pumpenmotors (22) intermittierend angetrieben wird und deren Druckseite mit einem Füllrohr (17) strömungsmäßig verbunden ist wobei die Steuerung des Pumpenmotors (22) mittels einer Steuereinrichtung (23) in Abhängigkeit vom Portionsgewicht erfolgt, die Wursthülle (18) vom ausströ-

EP 0 250 733 B2

menden Medium zwischen einem Bremsring (19) und dem freien Ende des die geraffte Hülle (18) aufnehmenden Füllrohr (17) hindurch abziehbar ist, die Abdreheinrichtung (25) oder die Clipseinrichtung mittels eines zweiten steuerbaren Motors (26), vorzugsweise eines zweiten Magnetläufers, steuerbar ist, der zweite Motor (26) zugleich auch Teil des Antriebs des drehbar gelagerten Füllrohrs (17) ist, der zweite Motor (26) mittels der Steuereinrichtung (23) des Pumpenmotors (22) steuerbar ist, die Steuereinrichtung (23) mit einem Impulsgeber (43) verbunden ist, dessen Impulse eine bestimmte Füllgewichtsmenge je Impuls angeben, dadurch gekennzeichnet, daß die Steuereinrichtung (23) einen Mikrocomputer (73) umfaßt, welcher aus den Impulsen des Impulsgebers (43) und der Sollgewichsmenge der abzufüllenden Portion sowie aus den physikalischen Daten des Füllgutes und des Füllmaterials und auch der vorgegebenen Füllgeschwindigkeit eine erste Betriebsspannungsrampe (RAMP 1) für den ersten, die Füllpumpe (2) antreibenden Motor (22) und eine hierzu gegenphasige zweite Betriebsspannungsrampe (RAMP 2) für den zweiten, die Abdreheinrichtung (25) bzw. die Clipseinrichtung steuernden Motor (26) erzeugt.

2. Maschine nach Anspruch 1, **dadurch gekennzeichnet,** daß die Pumpe (2) als Zahnradpumpe mit innenverzahntem, antreibbarem Außenrad (5) und damit kämmendem, außenverzahntem, exzentrisch zum Außenrad gelagertem Ritzel (6) ausgebildet ist.

3. Maschine nach Anspruch 1 oder 2, **dadurch gekennzeichnet,** daß der steuerbare Motor (22) mittels wenigstens eines Getriebes, insbesondere eines Zahnriemengetriebes, mit der Antriebswelle (37) des Pumpenaußenrades (5) verbunden ist.

4. Maschine nach Anspruch 3, **dadurch gekennzeichnet,** daß der Impulsgeber (43) mittels der Pumpen-Antriebswelle (37) oder einer vorgeschalteten Getriebewelle (33) für wenigstens die Pumpensteuerung antreibbar ist.

5. Maschine nach Anspruch 4, **dadurch gekennzeichnet,** daß der Impulsgeber (43) über ein Getriebe (40), insbesondere ein weiteres Riemen- oder Zahnriemengetriebe, mit der Pumpen-Antriebswelle (37) bzw. der Getriebewelle (33) in Antriebsverbindung ist.

6. Maschine nach Anspruch 5, **dadurch gekennzeichnet,** daß die Pumpen-Antriebswelle (37) oder die vorgeschaltete Getriebewelle (33) ein Antriebselement eines Antriebs eines Förderelements (47) in einem dem Pumpeneinlaß (4) vorgesetzten Füllbehälter (1) ist.

7. Maschine nach Anspruch 6, **dadurch gekennzeichnet,** daß das Förderelement (47) mittels eines Zahnrads bzw. Zahnkranzes (49) antreibbar ist, welches bzw. welcher mit einem von der Pumpenwelle (37) oder der vorgeschalteten Getriebewelle (33) antreibbaren Ritzel (48) in Eingriff ist.

8. Maschine nach Anspruch 7, **dadurch gekennzeichnet,** daß das Förderelement (47) in der Art einer Förderschnecke ausgebildet ist und wobei die Förderschnecke eine wendelförmige Gestalt mit einer kegelförmigen Hüllfläche aufweist und die Wendel bandförmig ausgebildet ist, und daß der Füllbehälter (1) zumindest im Bereich des Förderelements (47) eine konische Form aufweist.

9. Maschine nach Anspruch 8, **dadurch gekennzeichnet,** daß das Zahnrad bzw. der Zahnkranz (49) vom Förderelement (47) durchsetzt ist und letzteres beidseits überragt.

10. Maschine nach Anspruch 9, **dadurch gekennzeichnet,** daß der zweite Motor (26) eine Vorgelegewelle (50) antreibt, deren erstes Ritzel (51) oder dergleichen mit einem Zahnrad (53) oder dergleichen des Füllrohrs (17) in Antriebsverbindung und deren zweites Ritzel (55) oder dergleichen mit einem zweiten Zahnrad (56) oder dergleichen des Bremsrings (19) synchron antriebsverbunden sind.

11. Maschine nach wenigstens einem der vorangehenden Ansprüche, **dadurch gekennzeichnet,** daß die elektrische Steuerung (23) den Mikrocomputer (73), Speicher (77, 78) und Ein-/Ausgabekomponenten (79, 80) aufweist.

12. Maschine nach wenigstens einem der vorangehenden Ansprüche, **dadurch gekennzeichnet,** daß zur Portionierung der jeweils ersten Portion einer Charge ein den Anlaufbetrieb reflektierender Korrekturwert erzeugt wird, der die vom Impulsgeber (43) für die erste Portion gelieferte Impulszahl zur

13

Einhaltung der gewünschten Gewichtsmenge der Portion korrigiert.

13. Maschine nach Anspruch 12, **dadurch gekennzeichnet,** daß der Korrekturwert je Charge speicherbar ist und für die Herstellung der jeweils ersten Portion einer Charge vom Speicher (77, 78) abrufbar und der Steuerung zuführbar ist.

14. Maschine nach einem oder mehreren der Ansprüche 11 bis 13, **dadurch gekennzeichnet,** daß über eine Ein-/Ausgabesteuerung (80) eine Stichprobenwaage zur automatischen Erzeugung des Korrekturwertes und im übrigen zur laufenden automatischen Produktionsüberwachung der Füllmengen anschließbar ist.

## Claims

1. A machine for filling pasty media, particularly sausage meat, which has been divided into portions into a tubular casing (18) with a twisting device (25) for forming the tips or with a clip device and with a filler pump (2) which is driven intermittently by means of an electrically controllable pump motor (22) which is in particular in the form of a magnetic rotor and of which the discharge side is connected for flow to a filler pipe (17), the pump motor (22) being controlled by means of a control device (23) in dependence on the weight of the portion, the sausage casing (18) being pulled off by the emerging medium and passing through between a brake ring (19) and the free end of the filler pipe (17) accommodating the gathered-up casing (18), it being possible to drive the twisting device (25) or the clip device by means of a second controllable motor (26), preferably a second magnetic rotor, the second motor (26) simultaneously also being part of the drive of the rotatably mounted filler pipe (17), it being possible to drive the second motor (26) by means of the control device (23) of the pump motor (22), the control device (23) being connected to a pulse transmitter (43) of which the pulses indicate a given filling weight amount per pulse, characterised in that the control device (23) comprises a microcomputer (73) which generates from the pulses of the pulse transmitter (43) and the nominal weight amount of the portions to be filled and from the physical data concerning the filling material and the filling and also the predetermined filling speed, a first operating voltage ramp (ramp 1) for the first motor (22) driving the filler pump (2) and a second operating voltage ramp (ramp 2) which is in antiphase thereto for the second motor (26) controlling the twisting device (25) or the clip device.

2. A machine according to Claim 1, characterised in that the pump (2) is constructed as a gear pump with an internally toothed drivable outer wheel (5) and, meshing therewith, an externally toothed pinion (6) mounted eccentrically of the outer wheel.

3. A machine according to Claim 1 or 2, characterised in that the controllable motor (22) is connected to the drive shaft (37) of the outer pump wheel (5) by means of at least one transmission, particularly a toothed belt transmission.

4. A machine according to Claim 3, characterised in that the pulse transmitter (43) for controlling at least the pump can be driven by means of the pump drive shaft (37) or by an upstream transmission shaft (33).

5. A machine according to Claim 4, characterised in that the pulse transmitter (43) is connected to the pump drive shaft (37) or transmission shaft (33) for power transference via a transmission (40) particularly a further belt or toothed belt transmission.

6. A machine according to Claim 5, characterised in that the pump drive shaft (37) or the precedent transmission shaft (33) is a drive element of a drive of a conveyor element (47) in a filling container (1) which is upstream of the pump inlet (4).

7. A machine according to Claim 6, characterised in that the conveyor element (47) can be driven by means of a gear wheel or a ring gear (49) which engages a pinion (48) adapted to be driven by the pump shaft (37) or the precedent transmission shaft (33).

8. A machine according to Claim 7, characterised in that the conveyor element (47) is constructed in the manner of a screw conveyor, the latter having a helical form with a conical envelope surface, the helix being of strip-like construction, and in that the filling container (1) has a conical shape, at least in the region of the conveyor element (47).

9. A machine according to Claim 8, characterised in that the gear wheel or the ring gear (49) is traversed by and projects on both sides of the conveyor element (47).

10. A machine according to Claim 9, characterised in that the second motor (26) drives an intermediate shaft (50) of which the first pinion (57) or the like is connected for synchronous drive to a gear wheel (53) or the like on the filler pipe (17) in the drive connection and of which the second pinion (55) or the like is connected for synchronous drive to a second gear wheel (56) or the like on the brake ring (19).

11. A machine according to any one of the preceding claims, characterised in that the electrical control arrangement (23) comprises the microprocessor (73), memories (77, 78) and input/output components (79, 80).

12. A machine according to any one of the preceding claims, characterised in that for apportioning whichever is the first portion of a batch, a correction value reflecting the start-up operation is created which corrects the pulse number delivered by the pulse transmitter (43) for the first portion in order to respect the desired weight of the portion.

13. A machine according to Claim 12, characterised in that the correction value per batch can be stored and, for producing whichever is the first portion of a batch, can be called forward from the memory (77, 78) and fed to the control arrangement.

14. A machine according to one or more of Claims 11 to 13, characterised in that it is possible via an input/output control means (80) to connect a random test balance for automatically generating the correcting value and also for continuous automatic production monitoring of the filling quantities.

**Revendications**

1. Machine pour le remplissage par portions de produits pâteux, en particulier de pâte à saucisse à cuire, dans une membrane tubulaire (18), avec un dispositif de torsion (25) pour la formation des portions, ou avec un dispositif de pose de clips, ainsi qu'avec une pompe de remplissage (2) qui est entraînée par intermittence au moyen d'un moteur de pompe (22) commandé électriquement, et configuré en particulier comme coulisseau magnétique, et dont le côté refoulement est relié à écoulement à un tube de remplissage (17), la commande du moteur de pompe (22) s'effectuant au moyen d'un dispositif de commande (23) en fonction du poids des portions, le boyau à saucisses (18) étant extrait par le produit sortant, entre une bague de freinage (19) et l'extrémité libre du tube de remplissage (17) reprenant le boyau retroussé (18), le dispositif de torsion (25) ou le dispositif de pose de clips étant commandés au moyen d'un second moteur asservi (26), de préférence un second coulisseau magnétique, le second moteur (26) faisant également partie de l'entraînement du tube de remplissage (17) monté à rotation, le second moteur (26) étant commandé au moyen du dispositif de commande (23) du moteur de pompe (22), le dispositif de commande (23) étant relié à un générateur d'impulsions (43) dont les impulsions fournissent un poids de remplissage donné par impulsion, caractérisé en ce que le dispositif de commande (23) comporte un micro-ordinateur (73) créant à partir des impulsions du générateur d'impulsion (43) et du poids de consigne de la portion à remplir ainsi qu'à partir des données physiques du produit de remplissage et du matériau de remplissage ainsi que de la vitesse de remplissage prédéterminée une première pente de tension d'alimentation (RAMP 1) pour le premier moteur (22) entraînant la pompe de remplissage (2), et une seconde pente de tension d'alimentation (RAMP 2), en opposition de phase par rapport à la première, pour le second moteur (26) entraînant le dispositif de torsion (25) ou le dispositif de pose de clips.

2. Machine selon la revendication 1, caractérisée en ce que la pompe (2) se présente sous la forme d'une pompe à roue dentée avec une couronne (5) entraînable et à denture intérieure et un pignon (6) s'engrenant avec cette dernière, à denture extérieure et installé à rotation sur paliers en position excentrée par rapport à la couronne.

3. Machine selon la revendication 1 ou 2, caractérisée en ce que le moteur asservi (22) est relié à l'arbre d'entraînement (37) de la couronne (5) de la pompe au moyen d'au moins une transmission, et en particulier d'une transmission à courroie crantée.

4. Machine selon la revendication 3, caractérisée en ce que le générateur d'impulsions (43) commandant au moins la pompe est entraîné au moyen de l'arbre d'entraînement (37) de la pompe ou d'un arbre de transmission (33) branché en amont.

5. Machine selon la revendication 4, caractérisée en ce que le générateur d'impulsions (43) est relié à entraînement à l'arbre d'entraînement (37) de la pompe ou à l'arbre de transmission (33) par l'intermédiaire d'une transmission (40), et en particulier d'une autre transmission à courroie ou à courroie crantée.

6. Machine selon la revendication 5, caractérisée en ce que l'arbre d'entraînement (37) de la pompe ou l'arbre de transmission (33) branché en amont est un élément d'entraînement d'un entraînement d'un organe de refoulement (47), situé dans un réservoir de remplissage (1) placé à l'entrée de l'orifice d'aspiration de la pompe (4).

7. Machine selon la revendication 6, caractérisée en ce que l'organe de refoulement (47) est entraîné au moyen d'une roue dentée ou d'une couronne dentée (49) qui engrène un pignon entraîné (48) de l'arbre de la pompe (37) ou de l'arbre de transmission (33) branché en amont.

8. Machine selon la revendication 7, caractérisée en ce que l'organe de refoulement (47) est réalisé sous la forme d'une vis de refoulement, la vis de refoulement présentant la forme d'une spirale à surface d'enveloppe conique, la spirale étant réalisée sous la forme d'une tôle, et en ce que le réservoir de remplissage (1) présente une forme conique, au moins au voisinage de l'organe de refoulement (47).

9. Machine selon la revendication 8, caractérisée en ce que la roue dentée ou la couronne dentée (49) est traversée par l'organe de refoulement (47) et déborde de ce dernier des deux côtés.

10. Machine selon la revendication 9 caractérisée en ce que le second moteur (26) entraîne un arbre (50) débordant vers l'avant dont le premier pignon (51) ou similaire est relié à entraînement synchrone avec une roue dentée (53) ou similaire du tube de remplissage (17), et dont le second pignon (55) ou similaire est relié à entraînement synchrone avec une seconde roue dentée (56) ou similaire de la bague de freinage (19).

11. Machine selon l'une quelconque des revendications précédentes, caractérisée en ce que le dispositif électrique de commande (23) présente le micro-ordinateur constitué d'un microprocesseur (73), des mémoires (77, 78) et des interfaces d'entrée et de sortie (79, 80).

12. Machine selon l'une quelconque des revendications précédentes, caractérisée en ce qu'en vue du fractionnement de la première portion de chaque lot, on crée une valeur de correction qui correspond à la mise en route, et qui corrige le nombre d'impulsions délivrées par le générateur d'impulsions (43) pour la première portion, de manière à maintenir pour cette portion le poids souhaité.

13. Machine selon la revendication 12, caractérisée en ce que, lors de la préparation de la première portion de chaque lot, la valeur de correction de chaque lot est mise en mémoire et peut être rappelée de la mémoire (77, 78) et être envoyée vers la commande.

14. Machine selon l'une ou plusieurs des revendications 11 à 13, caractérisée en ce qu'une balance de pesée d'échantillons aléatoires, pour la création automatique de la valeur de correction et, pour le reste, en vue de la surveillance automatique de la production en cours des quantités remplies peut être connectée par l'intermédiaire d'une commande d'entrée et de sortie (80).

Fig. 1

Fig.2

Fig.3

Fig. 6

Fig. 4

Fig. 5

Fig.7

Fig. 8

Fig. 9